# EUROPEAN PATENT APPLICATION

(11) **EP 4 266 276 A1**
(43) Date of publication of application: **25.10.2023**
(21) Application number: 22169121.5
(22) Date of filing: 20.04.2022
(51) Int. Cl.: G07F 7/10, G06Q 20/40, G06K 19/07

(54) **ENROLMENT PROCESS FOR A BIOMETRIC CARD AND METHODS OF USE OF A BIOMETRIC CARD**

(71) Applicant: Mastercard International Incorporated, Purchase, NY 10577 (US)
(72) Inventor: Van de Velde, Eddy, 3000 Leuven, Flemish Brabant (BE); Vanneste, Paul, 1410 Waterloo, Walloon Brabant (BE); Smets, Patrik, 3130 Begijnendijk, Flemish Brabant (BE)
(74) Representative: Keltie LLP

(57) **Abstract**

A biometric payment card comprising: a processor (122); a data store (126) for storing cardholder biometric data as part of a biometric reference (130) for use in authorising transactions; a biometric sensor configured to provide a biometric matching result to the processor (122), the biometric matching result being derived from a comparison of cardholder biometric data obtained during a transaction with the biometric reference (130) wherein, for each transaction that the biometric payment card undertakes, the processor is configured to output the biometric matching result to a payment processing network (208).

## Description

### TECHNICAL FIELD

The present disclosure relates to an enrolment process for a biometric card and methods of use of a biometric card.

Embodiments of the present disclosure generally relate to methods, apparatus and systems for securely and conveniently enrolling consumer biometric data into a biometric payment card, and methods concerning subsequent use of the biometric payment card.

### BACKGROUND

Millions of consumer transactions occur daily using payment cards, such as credit cards, debit cards, prepaid cards, and the like financial products.

Consumers or cardholders may engage in transactions in a variety of different environments, such as in a retail store, over the Internet (or online), at automatic-teller machines (ATMs), and/or via a telephone call to order merchandise via an interaction between the cardholder and a customer service representative. Cardholder data may be obtained by swiping a payment card through a card reader (e.g. for a magnetic stripe card) or by inserting or tapping a card on to a chip card reader (e.g. for smart payment cards or chip cards).

The risk of fraudulent activity (and loss of money) has increased with the increased use of payment card accounts, and payment card transaction processing companies have designed and implemented various types of anti-fraud mechanisms and/or features, such as holograms, a photograph of the cardholder appearing on the rear side of the payment card, and/or a card Verification code (CVC). In addition, payment card credential data processing features have been implemented that require the cardholder to use passwords and/or personal identification numbers (PINs). The payment card transaction processing companies have also implemented various types of payment card account fraud monitoring and notification processes in order to prevent and/or curtail fraudulent activities.

Chip cards, when used in conjunction with a personal identification number (PIN), are a solution to counterfeit and lost and stolen card fraud. The chip prevents the card from being cloned and the PIN prevents it from being used by someone else if lost or stolen. With chip, counterfeit fraud has almost been eliminated and, as a result, card present fraud has plummeted to single digits basepoints (https://www.ecb.europa.eu/pub/cardfraud/html/ecb.cardfraudreport202110~cac4c418 e8.en.html). Lost-and-stolen card fraud is the most prominent category of card-present fraud, accounting for about half of it.

For contactless, with respect to lost & stolen protection, a balance has been struck between security and convenience. Typically, PIN will only be requested for high value transactions. The vast majority of low value transactions is accepted without cardholder verification and lost-and-stolen fraud is small.

Lost-and-stolen attacks are difficult to scale, as they require the fraudster to get physical possession of the card without the cardholder realizing it - as otherwise the card will be blocked. And they are hardly worth the effort because of the limitation on the transaction amount

Most attacks on bypassing lost-and-stolen protection come from ethical hackers, such as academics, that search publicity rather than financial gain.

Biometric cards are chip cards with on-card biometric verification as alternative to PIN for lost & stolen protection.

In order to further reduce the risk of fraud in card-present transactions, biometric payment cards, which are chip cards with on-card biometric verification functionality, provide a simple and secure way for cardholders to authenticate their identity for in-store purchases using biometrics (e.g. with a fingerprint), as an alternative to utilizing a PIN, a password or a signature, may be used. Since biometric characteristics are difficult to duplicate, they are ideal for use to protect against fraudulent activities.

Biometric payment cards may include fingerprint template data that is stored on the biometric payment card itself, and during purchase transaction processing (which includes user authentication of the cardholder) the fingerprint template data never leaves the biometric payment card. Instead, the cardholder places their finger (such as a thumb) on a fingerprint sensor built into the biometric payment card during a payment transaction. Fingerprint data is then obtained and compared to the stored fingerprint template data, and payment data is transmitted to a merchant's reader device, with an indication on successful authentication or not. The fingerprint template data on the biometric payment card data is not shared with the merchant, and therefore is not transmitted to a remote server for authentication purposes. Such operation protects the cardholder's personal identification data while also improving security of the purchase transaction.

Biometric cards have a higher activation/enrolment cost than 'standard' contactless cards with PIN. For biometric cards to be competitive, they need to offer better convenience at similar or better (perceived) levels of security. With fraud levels on standard cards being relatively low, convenience of use needs to be the main differentiator and selling point.

With current biometric cards, enrolment, in which the cardholder's biometrics are provisioned on to the card, is typically done as a separate process, prior to card activation and/or transaction processing. Enrolment may be done at home or, alternatively, the customer has to visit a bank branch.

The motivation behind this approach to enrolment is threefold:
1) Enhanced security: only the genuine cardholder can enrol their biometrics and use it as alternative to their PIN
2) Quality of biometric reference: a dedicated enrolment process improves the quality of the biometric reference that is stored within the payment card
3) Usability: post-enrolment, the cardholder has immediately the full convenience of the biometric card, and they may never have to enter a PIN again.

The downside of the current approach, compared to the 'standard' card activation process, is that
(1) Additional friction: the enrolment process adds friction before the card can be used and the cardholder starts benefitting from the card.
(2) Reduced efficiency: because the enrolment is done under different circumstances of actual usage, with different positioning of card and hence thumb or finger, it takes longer (=more presentments) to ensure that all positions are covered.
(3) Stress: the enrolment process makes the cardholder aware that they can wrongly position their thumb/finger and that biometric verification will not work - which then creates stress when they first use the card at the merchant.

It is an object of the present disclosure to provide an improved enrolment process for a biometric card that maintains the fraud protection benefits of such a payment card.

The present disclosure has been devised to mitigate or overcome at least some of the above-mentioned problems.

### SUMMARY OF THE DISCLOSURE

According to a first aspect of the present disclosure, there is provided a biometric payment card comprising: a processor; a data store for storing cardholder biometric data as part of a biometric reference for use in authorising transactions; a biometric sensor configured to provide a biometric matching result to the processor, the biometric matching result being derived from a comparison of cardholder biometric data obtained during a transaction with the biometric reference wherein, for each transaction that the biometric payment card undertakes, the processor is configured to output the biometric matching result to a payment processing network.

The present disclosure provides a biometric payment card which stores a biometric reference corresponding to biometric data of the cardholder. During a transaction, the biometric sensor is configured to provide a matching result from a comparison between the biometric reference and biometric data sampled during the transaction to the processor (the card's payment application) and the processor is configured to output this matching result to the payment processing network. The payment card according to the present disclosure is therefore configured to inform the payment processing network of the closeness of the biometric match with each transaction which enables analysis of the biometric performance of the card to be undertaken. The biometric matching result from the comparison is a quantitative biometric matching result from the biometric sensor based on analysis of the sampled and reference biometric data.

For each transaction that the card undertakes, the processor may be arranged to transmit from an output to the payment network, a transaction counter corresponding to the current transaction.

Upon card activation, the biometric reference may initially be empty, and the biometric sensor may be configured to collect biometric data with each transaction in an enrolment process to generate the biometric reference. During such an enrolment process, characterised by low values of the transaction counter, a PIN may be requested in order to verify the cardholder.

The biometric sensor may be arranged to update the biometric reference with cardholder biometric data each time the payment card is used in a transaction.

The payment card may comprise an output and the biometric sensor may be arranged to compare biometric data received during a transaction with the stored biometric reference in order to determine whether the received biometric data matches the biometric reference and to output a biometric matching result indicating the outcome of the comparison. The level of matching indicated by the biometric matching result may be sufficient for the payment device/payment processing network to skip requesting a PIN.

The biometric matching result is a quantitative matching result and may comprise a matching score (e.g. the matching result may be presented as one of a number of matching levels from "almost perfect match" to "almost no match") and wherein the biometric sensor may be arranged to generate a matching score in respect of biometric data provided during each transaction and to store the matching score in the data store.

The payment card may be arranged to output historical biometric matching results to the payment network. In this manner the payment network may be able to determine patterns of usage within the biometric data.

For each transaction that the card undertakes, in addition to outputting a transaction counter, the processor may be arranged to transmit from an output to the payment network, the biometric matching result for the current transaction, the previous n-1 biometric matching results.

The payment device may be configured to use biometric verification only once a threshold number of transactions has been reached. Where the payment card comprises chip/PIN and/or contactless functionality, the payment card may be configured to use such functionality until the threshold number of transactions have been performed and to subsequently use biometric verification. The processor may be arranged to count the number of transactions the payment device is used in and to trigger a PIN request if a threshold value is reached

According to a second aspect of the present disclosure, there is provided a method of detecting fraudulent use of a biometric payment card on a payment network, comprising, a network server: receiving transaction data from the biometric payment card during a current transaction, the transaction data comprising a transaction counter value associated with the current transaction and a biometric matching result indicating a successful match, the biometric matching result being derived from a comparison of biometric data obtained during the current transaction with a biometric reference; retrieving a transaction counter value corresponding to a last transaction that was approved by the payment network; triggering a PIN request in the event that the difference in transaction counter values between the received and retrieved transaction counter values exceeds a first threshold (also referred to herein as the relative threshold "RT1").

The second aspect of the present disclosure provides a computer implemented method at a network server which receives biometric data from a biometric payment device such as the biometric payment card according to embodiments of the first aspect of the disclosure and which triggers a PIN request (e.g. an online PIN request), despite the network server receiving transaction data indicating a positive biometric matching result, in the event that a transaction counter value associated with the current transaction shows a gap from the transaction counter associated with the last transaction approved by the payment network.

The received transaction counter may be an application transaction counter (ATC) value for the current transaction, ATC_{CURRENT}, and the network server may be configured to store the last ATC value for the payment card that corresponds to an authorised transaction as ATC_{AUTH}.

Despite a positive biometric matching result of the current transaction, in the event ATC_{CURRENT}-ATC_{AUTH} exceeds the first threshold value, the network server may be configured to trigger a PIN request (e.g. an RC65 request) to the payment card/device. In the event that a PIN request is triggered and PIN is successfully verified, the network server may be arranged to store ATC_{CURRENT} as ATCPIN. In the event that ATC_{CURRENT} - ATCPIN > second threshold value, the network server may be arranged to trigger a PIN request to the payment card/device. (It is noted that the second threshold value is also referred to herein as the relative threshold "RT2".)

The transaction data received from the biometric payment device may comprise n-1 biometric matching results corresponding to n-1 previous transactions prior to the current transaction and the current biometric matching result, and the n-1 biometric matching results may correspond to a biometric matching history.

The biometric matching history may be analysed (by the network server) and, in the event that the biometric matching history strongly fluctuates (in other words fluctuates in a statistically significant manner) between biometric match values (e.g. the biometric history may show biometric match results which fluctuate between values that indicate a high match rate such as between "almost perfect match", "really good match" and that indicate low match rate, such as "poor match" or "no match") and depending on ATC_{CURRENT} exceeding a predetermined absolute threshold value, the network server may be configured to take one or more of the following actions: not trigger a PIN request, trigger a PIN request, trigger a PIN request if the current transaction is for a high value transaction, change the status of the payment card to indicate that the payment card is compromised.

The biometric matching history may be analysed (by the network server) and, in the event that the biometric matching history shows a gradual improvement over time or, the opposite, a gradual degradation in biometric match result (e.g. the comparison of current biometric data to biometric reference shows a closer or poorer match respectively) and depending on ATC_{CURRENT} exceeding a predetermined absolute threshold value, the network server may be configured to take one or more of the following actions: not trigger a PIN request, trigger a PIN request, trigger a PIN request is the current transaction is for a high value transaction.

It is noted that there may be a number of different triggers for requesting a PIN. A relative difference in ATC values irrespective of the biometric matching history may be used (e.g. as discussed above ATC_{CURRENT} - ATC_{AUTH} may be greater than a first relative threshold (RT1) or ATC_{CURRENT} - ATC_{PIN} may be greater than a second relative threshold (RT2)). Variations in the biometric matching history in conjunction with the ATC_{CURRENT} value relative to a predetermined absolute threshold value may also be used (e.g. a degrading pattern in the biometric matching history and an ATC_{CURRENT} value greater than a first absolute threshold (ATC₁) may trigger a PIN request; a significant variation in the biometric matching results pattern and an ATC_{CURRENT} greater than a second absolute threshold value (ATC₂) may trigger a PIN request; a gradual improvement in biometric matching result and ATC_{CURRENT} less than a third absolute threshold (AT3) may indicate that the card is in a learning phase which may trigger a PIN request).

According to a third aspect of the present disclosure, there is provided a computer program product comprising instructions which, when the program is executed by a computer, cause the computer to carry out the method of the second aspect of the present disclosure as outlined above.

According to a fourth aspect of the present disclosure, there is provided a computer-readable storage medium comprising instructions which, when executed by a computer, cause the computer to carry out the method of the second aspect of the present disclosure as described above.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
Figure 1A is a diagram illustrating the components of a biometric payment card according to some embodiments of the disclosure;
Figure 1B is a block diagram of the components of a biometric payment card in accordance with some embodiments of the disclosure;
Figure 2 is a block diagram of a purchase transaction system to illustrate further features of the payment card of Figure 1;
Figure 3 is a diagram comparing the activation and enrolment processes and subsequent transaction processing associated with a traditional contactless card, a traditional biometric payment card and a biometric payment card in accordance with an embodiment of the present disclosure;
Figure 4 shows a method of detecting fraudulent use of a payment card in accordance with an embodiment of the present disclosure; and
Figure 5 is a diagram showing a transaction system and the payment interactions between entities in accordance with embodiments of the present disclosure;
Figure 6 is a diagram showing different biometric transaction history patterns for a biometric payment card in accordance with embodiments of the present disclosure.

### DETAILED DESCRIPTION

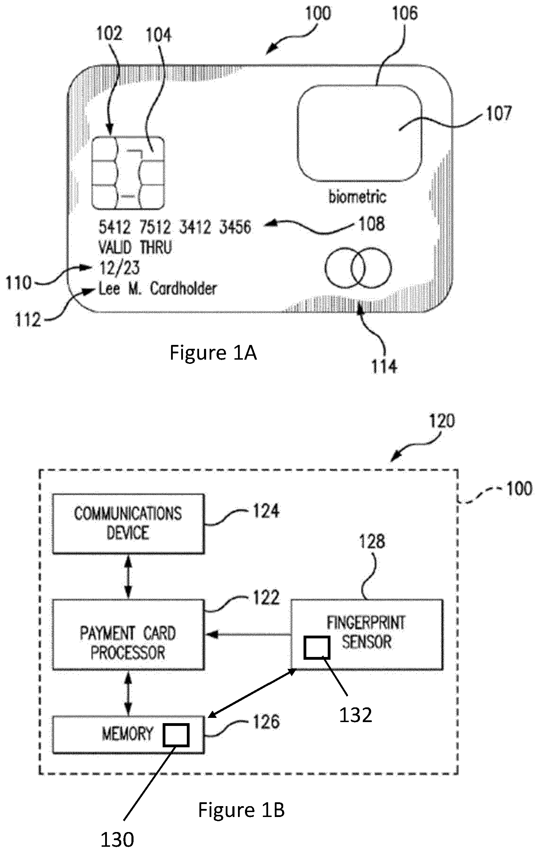

General and specific embodiments of the disclosure will be described below with reference to Figures 1 to 6.

Reference will now be made in detail to various novel embodiments, examples of which are illustrated in the accompanying drawings. The drawings and descriptions thereof are not intended to limit the invention to any particular embodiment(s). On the contrary, the descriptions provided herein are intended to cover alternatives, modifications, and equivalents thereof. In the following description, numerous specific details are set forth in order to provide a thorough understanding of the various embodiments, but some or all of these embodiments may be practiced without some or all of the specific details. In other instances, well- known process operations have not been described in detail in order not to unnecessarily obscure novel aspects.

Figure 1A is a diagram illustrating a biometric payment card 100 in accordance with some embodiments. The biometric payment card 100 may be transmitted to the consumer or user by his or her issuer via, for example, the mail or by courier to the consumer's home or residence. In some embodiments, the biometric payment card 100 is a smart card or chip card that includes an EMV^{®} chip 102 connected to an antenna and, optionally, having a contact faceplate 104 on the front side or face of the card. The EMV^{®} chip 102 may be a computer chip or computer processor with an operating system, one or more applications, and a data storage component or element (not shown) which stores instructions for conducting operations in accordance with processes described herein. The EMV^{®} chip 102 permits the biometric payment card 100 to interact with a merchant card reader (not shown) in accordance with EMV^{®} specifications to process purchase transactions. Specifically, the EMV^{®} chip 102 operates in accordance with the EMV^{®} contactless specifications which concern transactions using proximity near-field communications (NFC) payment devices. The NFC devices allow transactions to be made by waving or tapping the payment card containing the EMV^{®} chip on an EMV^{®} contactless enabled terminal, such as the payment card reader device 202. In embodiments disclosed herein, the EMV^{®} chip 102 is operably connected to a biometric sensor 106, which in this example is an integrated or embedded fingerprint sensor 106 having a finger touch pad 107 on the front side surface or face of the biometric payment card 100.

In some embodiments, the biometric payment card 100 is made of a plastic material, and has dimensions conforming to the known ID-1 format, which is commonly used for credit cards, debit cards, ATM cards and the like. (The ID-1 format specifies a card size of 85.60 x 53.98 mm and includes rounded comers having a radius of between 2.88 millimetres (mm) to 3.48 mm). The biometric payment card 100 may also include a primary account number (PAN) 108, an expiration date 110, the cardholder's name 112, and a payment card logo 114 which are printed or embossed on the front side or face of the payment card 100. It should be understood that the biometric payment card 100 may be made of other types of materials, may have different forms, and may include other features and/or components.

Figure 1B is a block diagram 120 of the components of a biometric payment card in accordance with some embodiments. In some embodiments, the biometric payment card 100 includes a payment card processor 122 (also referred to herein as a "payment application") operably connected to a communications device 124 and to a memory 126 (the processor 122, communications device 124 and memory 126 corresponding to the chip 102 in Figure 1A). A fingerprint sensor 128 (corresponding to the biometric sensor 106 in Figure 1A) is also operably connected to the payment card processor 122 and is operable to provide fingerprint comparison outcome data based on fingerprint data obtained from a cardholder to the payment card processor 122. In implementations disclosed herein, the communications device 124 is a near-field communication (NFC) device operable to communicate with, for example, an NFC reader device of a merchant and the like.

The memory 126 is operably connected to the biometric sensor 106/fingerprint sensor 128 and is arranged to store a biometric reference 130 derived from biometric data from the biometric sensor 106/fingerprint sensor 128. The fingerprint sensor 128 additionally comprises a processor 132 which is arranged to store the biometric reference 130 in the memory 126 and also to carry out biometric matching comparisons between the stored biometric reference 130 and biometric data obtained by the fingerprint sensor 128 from a cardholder.

The memory 126 may store an operating system, one or more applications, and instructions for performing cryptographic calculations and payment operations. In some embodiments, the payment card processor 122 is an EMV^{®} chip which operates as explained above in accordance with EMV^{®} specifications to process purchase transactions.

The memory 126 may equally store an operating system and application, for operations, such as a cardholder enrolment process, a fingerprint comparison process (to be performed by the processor 132) and a fingerprint template data update process (to be performed by the processor 132), in accordance with processes described herein.

In the arrangement shown in Figure 1B the fingerprint sensor 128 (and the processor 132 therein) are in communication with the memory 126 which is shared with the payment card processor 122. In an alternative arrangement the fingerprint sensor 128 may have its own dedicated memory (in addition to the processor 132) such that the fingerprint data (the biometric reference 130) is stored in a separate memory location. In such an alternative arrangement the operating system and application for conducting cardholder enrolment, fingerprint comparisons and fingerprint template updates would be stored in the dedicated memory of the fingerprint sensor 128.

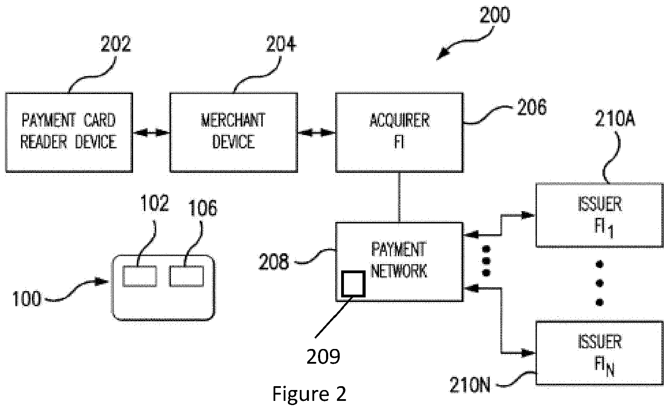

Figure 2 is a block diagram of a purchase transaction system 200 to illustrate a biometric authentication method and a cardholder fingerprint enrolment process in accordance with some embodiments.

As shown in the Figure a chip-enabled payment card reader 202 is in communication with a merchant device 204. The merchant device 204 in turn is in communication with an acquirer 206, a payment network 208 and one of more issuers (210A...210N). The payment network 208 comprises a network server 209.

During a purchase transaction, in some implementations the biometric authentication process entails a cardholder presenting his or her biometric payment card 100 to a chip-enabled NFC payment card reader 202 while at the same time holding their thumb on the finger touch pad 107 of the built-in fingerprint sensor 106 located on the face of the biometric payment card. Fingerprint template data is then extracted by the processor 132 from the cardholder's fingerprint image (thumb print) received from the fingerprint sensor 106 and compared against one or more cardholder biometric reference templates (e.g. fingerprint template(s)) 130 stored in the memory 126 of the biometric payment card 100. The card reader 202 then receives payment data and an indication whether the (biometric) authentication of the cardholder was successful or failed (e.g., whether fingerprint template data of the user matches one or more stored biometric templates). In addition, in some implementations, fingerprint sensor 128 may also generate a matching result/score and send it to the EMV^{®} chip that, in turn, transmits it to the payment card reader device 202.

In implementations described herein, the payment card reader device 202 transmits the biometric authentication data, the payment data and the matching result/score to the merchant device 204 (which may be a point of sale device such as a cash register) for onward transmission through the payment system and further processing.

Transaction data including biometric authentication data may therefore be sent via the acquirer financial institution 206 to the payment network 208. As described below the network server 209 of the payment network 208 may operate to analyse the received biometric authentication data and additionally forward transaction data on to the issuer financial institution (210A-210N) for transaction authorisation.

When a transaction is authorized, the issuer FI transmits an authorization message to the merchant device 204 via the payment network 208 and acquirer FI 206.

Embodiments of the present disclosure provides for a "transactional enrolment" process in which the enrolment of the biometric payment card is performed as the customer is transacting. In other words, enrolment is performed as payment transactions at a contactless point-of-sale device are undertaken and the cardholder's biometric reference 130 is built up over time rather than being set during a traditional enrolment process.

Enrolment according to embodiments of the present disclosure may start as soon as the card is activated and may essentially be transparent to the cardholder. As the enrolment of the card takes place over the course of a number of transactions, it is noted that the biometric reference 130 stored in the memory 126 of the payment card 100 is gradually built up. While the biometric payment card 100 is in such a "learning biometrics" phase, if cardholder verification is required of the cardholder (e.g. for a high value transaction), then this may be done via PIN entry.

Once the biometric reference 130 within the payment card has matured, then the need for cardholder authentication through PIN entry for high value transactions will be taken over by biometric authentication for every transaction. PIN entry may then only be requested to ensure the cardholder does not forget their PIN (it is noted that in the event of biometric authentication failing, e.g. because of injury to the cardholder, then the cardholder would be required to use PIN entry).

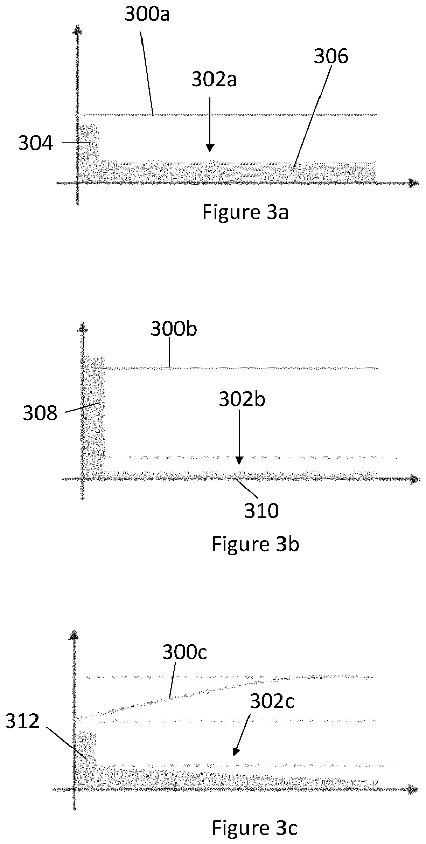

The transactional enrolment process according to embodiments of the present disclosure and the associated security of that process is compared in Figure 3c with a standard contactless payment card (Figure 3a) and a known biometric payment card that is enrolled in the traditional manner.

In Figures 3a, 3b and 3c the level of security provided by the card in question is shown (see 300a, 300b, 300c) along with the level of cardholder "friction" (see 302a, 302b, 302c) which corresponds to interactions that the cardholder needs to undertake in order to use the card (e.g. activating the card by phoning their issuer or going to the bank branch, providing a PIN for high value transactions etc).

Figure 3a shows a standard contactless payment card. Activation of such a card may be as simple as dipping their card and entering their PIN at a payment terminal before contactless payment functionality is activated. Compared to subsequent uses of this card therefore, the initial card interaction requires the cardholder to undertake a one-time action. This is indicated by the raised bar 304 in the cardholder friction level 302a. Following the initial transaction, the friction level 302a drops to a lower level 306 in which the card can always be tapped, and PIN entry is only required for high value transactions. The contactless payment card provides sufficient lost & stolen protection 300a as high value transactions are protected by the requirement for PIN entry.

Figure 3b shows a known biometric payment card. In this case the cardholder friction level 302b has a higher initial level 308 because the requirement to complete a biometric enrolment process (either at home or in a bank branch) in order to generate a biometric reference 130 on the payment card. Once enrolment is complete however the friction level 302b drops to a relatively lower level 310 (compared to the contactless card) because all transactions are contactless and are authorised by the biometric functionality of the payment card (which happens transparently to the cardholder as they present their card). The lost and stolen protection 300b is relatively higher for this payment card because low value transactions are authenticated by the biometric security features of the payment card as well.

For payment cards in accordance with embodiments of the present invention with a transactional enrolment process, the initial friction level 312 and security level 300c are similar to the contactless payment card as an initial dip and PIN entry may be required to activate the card and then PIN requests will be required for a proportion of the immediately subsequent transactions - primarily the high value transactions. However, as the payment card 100 learns the cardholder's biometric reference 130 the security level rises and the friction level 302c falls (as the frequency of PIN requests drops as the biometric reference matures). Post the "biometric learning" phase, security 300c and friction level 302c are at par with current biometric cards.

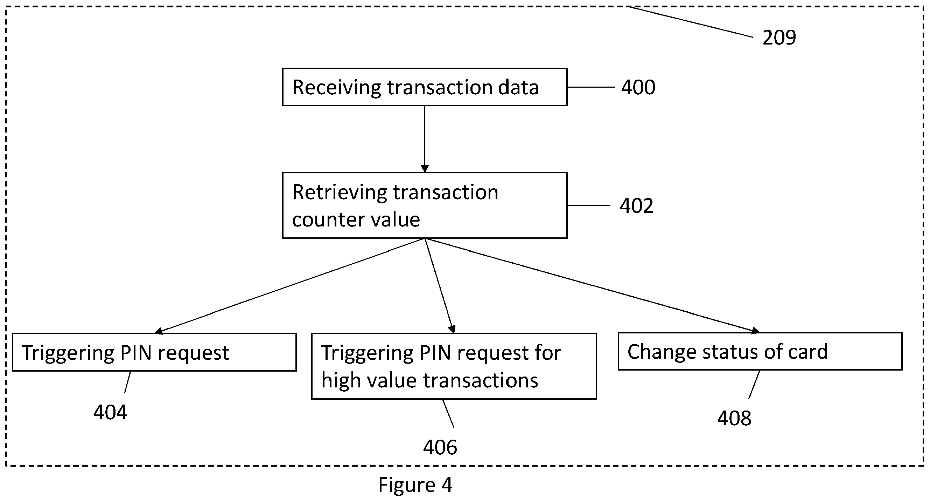

A method of detecting fraudulent use of a biometric payment card on a payment network according to embodiments of the present disclosure is shown in Figure 4. At a network server (209), transaction data is received (step 400) from the biometric payment card during a current transaction, the transaction data comprising a transaction counter value associated with the current transaction and a biometric matching result, the biometric matching result being derived from a comparison of cardholder biometric data obtained during the current transaction with a biometric reference (130). In step 402, the server 209 retrieves a transaction counter value corresponding to a last transaction that was approved by the payment network. One or more actions may then be taken, such as:
- triggering (step 404) a PIN request in the event that the difference in transaction counter values between the received and retrieved transaction counter values exceeds a first threshold (RT1);
- triggering (step 406) a PIN request in the event that the difference in transaction counter values between the received and retrieved transaction counter values exceeds a first threshold (RT1) and the transaction is for a high value amount;
- changing (step 408) of the payment card, e.g. to "compromised".

According to embodiments of the present disclosure, the biometric payment card 100 initially enters a "biometric learning" phase in which a biometric reference 130 for the cardholder is created. Once the learning phase has concluded however, the biometric sensor 106 continues to sample the cardholder's biometrics in order to update the biometric reference for the cardholder for each transaction where biometrics are captured.

When the biometric payment card 100 is issued and activated by the cardholder, the memory 126 does not contain a biometric reference that may be used to authenticate the cardholder during transactions, in other words its biometric reference is 'empty'. Consequently, after initial activation and before the biometric reference is mature, the biometric match rate determined by the processor 132 between the biometric data returned by the sensor and the stored biometric reference will be low.

In the initial biometric learning phase therefore, if cardholder verification is requested, the payment application 122 or the network 208/network server 209 may trigger a PIN request.

As the cardholder uses the card, the biometric reference 130 stored in the memory 126 will be updated by the processor 132 using data from the sensor 106. After a predefined number of transactions, e.g. 50 transactions, the biometric reference may be regarded as mature and subsequent transactions using the biometric sensor may return a match rate from a comparison between sampled biometric data and the biometric reference. A predetermined authentication threshold for the match rate may be defined that indicates a positive match between the biometric data obtained by the sensor and the biometric reference.

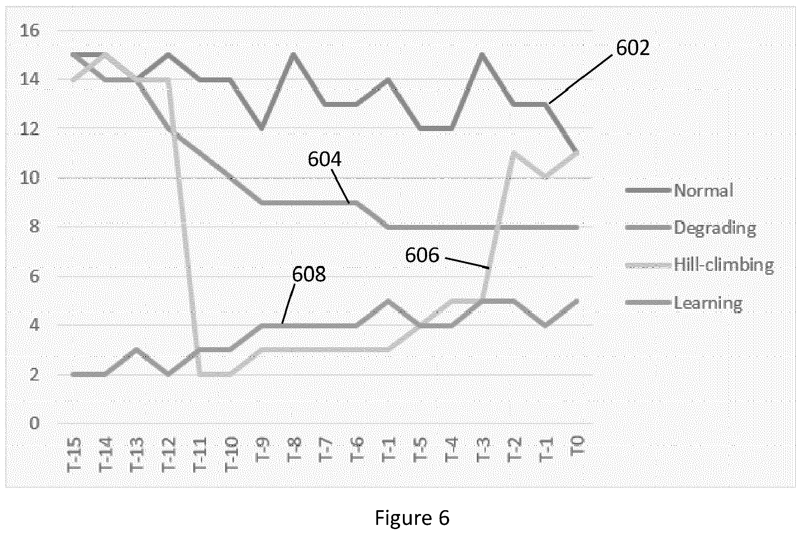

Once the biometric reference 130 is mature therefore, the payment application 122 and/or the payment network 208 may now rely on the biometric verification, as alternative to PIN verification. The transition from requesting a PIN to relying on biometric verification may occur gradually insofar as the payment application 122 or the network 208 observes a consistent 'learning' pattern - as described below in relation to Figure 6.

Over time the biometric traits presented by the cardholder during a transaction may change because:
- The positioning of the cardholder's finger on the card evolves
- The actual fingerprint evolves because of aging, (change in) profession, injury etc.
- The circumstance of capture changes because of moist, dirt etc.

Therefore, even though a mature biometric reference 130 exists in the memory 126 of the biometric payment card 100, the biometric match rate determined by the processor 132 may still decline (i.e. reduce) unless the biometric reference is adjusted.

Embodiments of the present disclosure therefore acknowledge that it may be advantageous for the cardholder if the biometric payment card 100 continues to update the biometric reference.

The extent of each update to the biometric reference may depend on:
- the biometric traits of the transaction in progress (e.g. the quality, size, correlation with reference)
- the context of the (payment) transaction, e.g. whether the transaction completed with or without a PIN being requested. In the event that a transaction is accompanied with PIN verification then the biometric data received from the biometric sensor 106 may be given more weight in determining/updating the biometric reference stored on the card
- the biometric traits of previous transactions and (primarily) how they compared to the reference

In the event that a fraudster gains physical access to the biometric payment card 100 the biometric reference of the cardholder may potentially be overwritten by the fraudster's biometric data.

A fraudster may get access to the biometric payment card 100 shortly after its activation (when the biometric reference of the genuine cardholder is in the process of being established) or well beyond the card activation (when the biometric reference of the genuine cardholder is well established).

Access by a fraudster may be short and intermittent, allowing them to gradually add their fingerprint through a small number of offline transactions (i.e. by using a device outside a payment network that mimics the functionality of a payment terminal and which causes the biometric sensor 106 to return biometric data to the processor 132 thereby causing an update of the biometric reference). Alternatively, a fraudster may gain a single time access of extended duration in which the card is not returned to the genuine cardholder. In such an instance the biometric reference may be evolved by the fraudster through a large number of (offline) transactions, prior to using the card for purchases or cash withdrawal.

Since in both scenarios the fraudster requires physical access to the card the scalability of such an attack is limited. However, the limited risk provided by this scenario may be mitigated by tracking an application counter and by analysing the transaction history of the payment card 100.

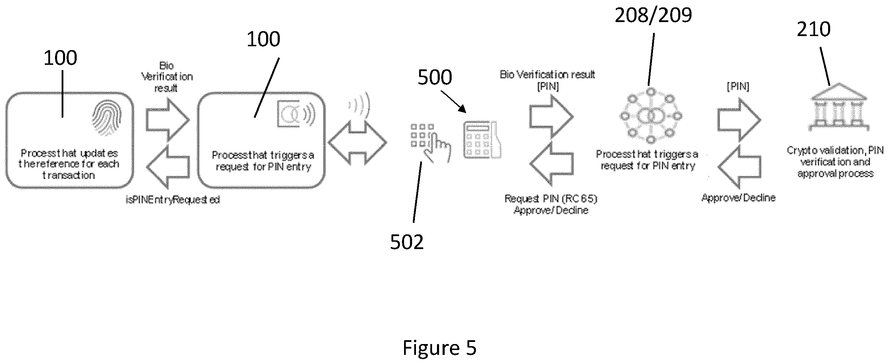

Figure 5 shows a purchase transaction system 200 and the flow of data within the system during a transaction. The system shown in the figure comprises a physical biometric payment card 100, a payment terminal 500 comprising a PIN pad 502, a payment network 208 and an issuer entity 210.

It is noted that for clarity and to highlight the flow of information within the system, the biometric payment card 100 is shown twice in Figure 5. On the far left of Figure 5 the biometric payment card 100 is shown with the biometric sensor 106 (e.g. a fingerprint sensor 128). The biometric payment card 100 is then shown again with the payment application/processor 122 visible.

The flow of information through the transaction system 200 is indicated by the arrows in Figure 5.

Activation of the biometric payment card 100 is performed as per known processes, e.g., via a PIN mailer, mobile app, online activation or toll-free number, in combination with cardholder verification (KYC).

Once the biometric payment card 100 has been activated then biometric verification data, which may be used to build or update the biometric reference, will be present for most, if not all, contactless transactions. If the cardholder does not place their fingerprint on the biometric sensor 106 during a transaction, the payment transaction may still proceed but transactional enrolment will not progress, and the transaction will additionally occur without biometric authentication.

During enrolment of the biometric payment card in accordance with embodiments of the present disclosure, a portion of the transactions that are undertaken by the cardholder may require completion using an online PIN. PIN entry may be triggered by the card, by the point-of-sale terminal 500 (e.g., if the transaction is a high value transaction) or by the issuer/network (e.g., A network authorisation response code 65 (RC65) may be issued during a transaction by the Mastercard network and the issue of such a code will require the cardholder to go through an online PIN entry process).

It is noted that online PIN entry during a contactless transaction does not require the cardholder to insert their payment card into a PIN reader. Instead, the cardholder is requested to enter their PIN into the PIN pad 502 and the PIN is encrypted and sent to the network where it may be verified.

It is noted that the payment application will know that a PIN request has been triggered if the request is triggered by either the payment card itself or the PIN terminal 500. It will not know the outcome of the PIN validation however as this is an online validation.

For a fraudster to add their own fingerprint to the biometric payment card 100, depending on the steepness of the learning algorithm used by the payment card processor 132 as part of the transaction enrolment process, the fraudster will need to present their biometrics frequently to have a meaningful impact on the biometric reference. This in turn has two measurable impacts:
- First, it means a burst of transactions - and application counters (or Application Transaction Counters (ATCs) as they are formally known) that are consumed - that are never visible on the payment network; and;
- Secondly, there will be a drop in the match rate of the biometric authentication process that is carried out on the card followed by a gradual improvement of the biometric match rate.

Therefore, in order to mitigate against the risk that a fraudster gains physical access to a biometric payment card 100 and attempts to manipulate the biometric reference, then the network server 209 may analyse the transaction history of a payment card to look out for the following:
- A burst of application counters/ATCs (over a short period of time) that are not visible on the payment network, and;
- A change in the biometric matching results for the payment card, e.g. a drop in matching result followed by a gradual improvement.

The gap in transactions that may occur will be proportional to the desired improvement for the matching of the fraudster's fingerprint:
- To get a biometric match that is at par with the genuine cardholder in one session, the number of transactions and therefore the gap should be significant - e.g., 100 consecutive offline transactions.
- To have a meaningful lasting impact on the reference that survives subsequent cardholder usage, the gap is still meaningful - e.g., 30 consecutive offline transactions.

Anything below 30 consecutive offline transactions would be undone, in part or in full, by the learning process when the genuine cardholder starts using the card again.

If the biometric payment card 100 is returned and subsequently used by the genuine cardholder, the network server 209 may:
- overlook a small ATC gap (though it is noted that any lasting impact on the biometric reference would be small in the event of a small ATC gap in transactions);
- put the biometric payment card 100 in an "alert status" if there is a larger ATC gap in transactions that have been seen by the network. This alert status may "age out" as the genuine cardholder uses their card. However, if the fraudster has intermittent access to the card and another large ATC gap appears then the payment network may place the card into a "compromised" status and alert the cardholder. While the card status remains "compromised" then the biometric data from the card may be ignored by the payment network which may fall back on PIN verification for all high value transactions.
- Immediately place the card into a "compromised" status and inform the cardholder and request PIN verification for all high value transactions.

The presence of an ATC gap in the transaction history may be the primary reason that the network server 209 triggers a PIN request, despite a positive biometric match result, for a particular biometric payment card 100 or places it into an "alert" or "compromised" status. However, it is noted that there may be legitimate reasons for ATC gaps in the transaction history and in addition the network server 209 may look at the biometric matching result history. For intermittent access by a fraudster, when the genuine cardholder starts using the card again, the biometric matching result for the transaction in progress should be lower than for previous transactions - as the reference has been changed towards the biometrics of the fraudster through offline transaction

Through an analysis of the ATCs and the associated biometric verification results the network can detect any irregularity in the (continuous) learning process and act accordingly.

### IMPLEMENTATION

An example implementation of a method of detecting fraudulent use of a biometric payment card 100 on a payment network 208 is now described.

### Data

Transaction data that is provided during a transaction by the biometric payment card 100 to the payment network 208/network server 209 comprises:
- the Application Transaction Counter (ATC) of the current transaction;
- the biometric matching result of the current transaction (as determined by the processor 132 based on a comparison between the biometric data received from the biometric sensor (106, 128) and the biometric reference stored in the memory 126 of the card 100;
- the previous *n*-1 biometric matching results. The payment card 100 may store a predetermined number of biometric matching results in the card memory 126 and these may be transmitted as described below to the payment network 208.

For each payment card 100 that is enabled to perform the transactional enrolment process in accordance with embodiments of the present invention, the server 209 may keep track of:
- the highest ATC for a transaction that was approved i.e. ATC_{AUTH}
- the highest ATC for which a PIN was requested and that was approved i.e. ATC_{PIN}

As noted above, the payment network/network server additionally receives from the payment card 100:
∘ the biometric matching result associated to this ATC
∘ the previous n-1 biometric matching results, associated to this ATC

### Coding

Within the transaction data transmitted to the payment network, the ATC may be coded on two bytes.

Biometric matching may be output in accordance with a quantitative categorisation level, e.g. almost perfect match, really good match, rather good match,...,poor match, really poor match, almost no match. If there are, for example, 16 levels of biometric match categories then the biometric matching result may be encoded using 4 bits. If the payment card 100 supplies the network 208 the biometric matching results for the last 16 transactions (including the current transaction) then the biometric match history may be encoded on 8 bytes.

### Network analysis

The network server 209 on the payment network 208 may compare the current ATC value received in the transaction data from the biometric payment card 100 to the highest ATC for a transaction that was approved i.e. ATC_{AUTH}. A large gap in the ATC value (e.g. ATC_{CURRENT} - ATC_{AUTH} > a first threshold value, RT1) may cause the network server to take one or more actions, e.g. requesting a PIN, triggering an alert, changing the card status to "compromised", analysing the biometric matching history.

If the stored (ATC_{AUTH}) and the current ATC are sufficiently close, depending on the current match result, then the network server 209 may skip triggering a PIN request.

Figure 6 shows examples of biometric patterns that may be determined from the biometric matching history. The x axis in Figure 6 shows the transaction number (T0 being the current transaction and T-1... T-15 being the previous 15 transaction). The y axis in Figure 6 shows the categorisation level of the biometric matching result where "0" corresponds to no match and "15" corresponds to a perfect or near perfect match.

Figure 6 shows four example patterns of biometric matching results:
- Normal pattern 602 - the biometric matching result fluctuates around high match rate corresponding to a very good to near perfect match between the stored biometric pattern and the biometric data supplied to the processor 122 by the biometric sensor (106, 128);
- Degrading pattern 604 - the biometric matching result starts at a high value (in this case "15") and gradually declines until it fluctuates around mediocre match rate, potentially preceded by a sudden or gradual decline. Such a pattern may be seen where the cardholder's biometrics have changed for some reason, e.g. abrasions to the cardholder's fingerprints following, for example, the handling of an abrasive material;
- Hill-climbing pattern 606 - the biometric matching result starts at a high level and then a deep dive in biometric matching result is seen followed by mediocre matching rate(s) or a climbing matching rate. Such a pattern could indicate that the biometric payment card has been acquired by a fraudster and the pattern shows matching results from the genuine cardholder (the initial high matching rate) followed by lower results when the card has been used by the fraudster.
- Learning pattern 608 - this pattern shows a gradual but consistent improvement of the match rate and may be observed as a genuine cardholder uses the card and the card undergoes transaction enrolment in accordance with embodiments of the present disclosure.

Based on these patterns, the network server 209 may take different actions, for example:
- For "normal pattern" 602, a request for a PIN may be triggered when no PIN has been requested for *m*≥40 (40 or more transactions) (ATC_{CURRENT}-ATC_{PIN} ≥ m, where m is a second threshold value, RT2). This action may be triggered to ensure that the customer doesn't forget their PIN;
- For "degrading pattern" 604, a PIN request may be triggered when no PIN has been requested for, for example *m*≥*10* (10 or more transactions). In this case the payment network 208 may trigger a PIN request more quickly (compared to the normal pattern 602 above) because an analysis of the pattern matching history indicates that the matching level is falling. It is noted that in addition to looking for a degrading pattern, the network server 209 may assess whether the ATC_{CURRENT} is greater than a first absolute threshold value (e.g. ATC_{CURRENT} > AT₁). In other words, the network server 209 may trigger a PIN request where a degrading pattern is seen in the biometric matching results and the payment card has been in use for more than a predetermined length of time.
- For "hill-climbing pattern" 606, a PIN may be triggered for every high-value transaction. It is noted that in addition to looking for a significant variation in the biometric matching results pattern, the network server 209 may assess whether the ATC_{CURRENT} is greater than a second absolute threshold value (e.g. ATC_{CURRENT} > AT₂). In other words, the network server 209 may trigger a PIN request where a significant variation is seen in the biometric matching results and the payment card has been in use for more than a predetermined length of time.
- For "learning pattern" 608, which corresponds to the pattern that would be expected as the biometric payment card 100 goes through its normal training process during enrolment, a PIN may be triggered for every high-value transaction. It is noted that in addition to looking for a learning pattern, the network server 209 may assess whether the ATC_{CURRENT} is smaller than a third absolute threshold value (e.g. ATC_{CURRENT} < AT₃). In other words, the network server 209 may trigger a PIN request where a learning pattern is seen in the biometric matching results and the payment card has been in use for less than a predetermined length of time.

In the above discussion it is noted that the first and second threshold values (RT1 and RT2 respectively) are relative thresholds. The AT₁/AT₂/AT₃ thresholds on the other hand are absolute threshold values. In a specific implementation, the first and second threshold values may be set to the same value (i.e. RT1=RT2). In a further implementation, AT₁=AT₂=AT₃.

The actions taken by the network server 209 may be adapted in the event that gaps in the ATC value (e.g. ATC_{CURRENT} - ATC_{AUTH} > a first threshold value) are detected, for example:
- A 'learning' pattern 608 that includes or is preceded by a significant number of offline transactions (i.e. an ATC gap) may actually be the latter part of a "Hill-climbing". Depending on the ATC gap, the payment network 208 may change the status of the card 100 to 'alert' or 'compromised'.
- A 'normal' pattern preceded by a significant ATC gap may trigger the 'compromised' status, as the gap may indicate that a number of offline transactions may have been used to migrate the biometric reference completely to the fraudster's biometrics.

### ADVANTAGES

Advantageously, the present disclosure describes methods and systems which provide a biometric payment card 100 that may be used, and which may be associated with a level of security that the use of biometrics allows, without requiring a traditional enrolment process to be undertaken.

Many modifications may be made to the specific embodiments described above without departing from the scope of the invention as defined in the accompanying claims. Features of one embodiment may also be used in other embodiments, either as an addition to such embodiment or as a replacement thereof.

## Claims

1. A biometric payment card comprising:
a processor (122);
a data store (126) for storing cardholder biometric data as part of a biometric reference (130) for use in authorising transactions;
a biometric sensor configured to provide a biometric matching result to the processor (122), the biometric matching result being derived from a comparison of cardholder biometric data obtained during a transaction with the biometric reference (130)
wherein, for each transaction that the biometric payment card undertakes, the processor is configured to output the biometric matching result to a payment processing network (208).

2. A payment card as claimed in Claim 1, comprising an output and wherein the biometric sensor is arranged to compare biometric data received during a transaction with the stored biometric reference in order to determine whether the received biometric data matches the biometric reference and to output a biometric matching result indicating the outcome of the comparison.

3. A payment card, as claimed in Claim 2, wherein the biometric matching result comprises a matching score and wherein the biometric sensor is arranged to generate a matching score in respect of biometric data provided during each transaction and to store the matching score in the data store.

4. A payment card as claimed in Claim 2 or Claim 3, wherein the payment card is arranged to output historical biometric matching results to the payment network.

5. A payment card as claimed in Claim 4 wherein, for each transaction that the card undertakes, the processor is arranged to transmit from an output to the payment network, a transaction counter corresponding to the current transaction, the biometric matching result for the current transaction, the previous n-1 biometric matching results.

6. A method of detecting fraudulent use of a biometric payment card on a payment network, comprising, at a network server (209):
receiving (400) transaction data from the biometric payment card during a current transaction, the transaction data comprising a transaction counter value associated with the current transaction and a biometric matching result indicating a successful match, the biometric matching result being derived from a comparison of biometric data obtained during the current transaction with a biometric reference (130)
retrieving (402) a transaction counter value corresponding to a last transaction that was approved by the payment network
triggering (404) a PIN request in the event that the difference in transaction counter values between the received and retrieved transaction counter values exceeds a first threshold.

7. A method as claimed in Claim 6, wherein the received transaction counter is an application transaction counter (ATC) value for the current transaction, ATC_{CURRENT}, and the network server is configured to store the last ATC value for the payment card that corresponds to an authorised transaction as ATC_{AUTH}.

8. A method as claimed in Claim 7, wherein, in the event ATC_{CURRENT} - ATC_{AUTH} exceeds a first threshold value (RT1), the network server is configured to trigger (404) a PIN request to the payment card.

9. A method as claimed in Claim 8, wherein, in the event that a PIN request is triggered and the PIN is successfully verified, the network server is arranged to store ATC_{CURRENT} as ATC_{PIN.}

10. A method as claimed in any of Claims 7 to 9, wherein, in the event that ATC_{CURRENT} - ATCPIN > second threshold value (RT2) the network server is arranged to trigger a PIN request to the payment card.

11. A method as claimed in Claim 6, wherein the transaction data received from the biometric payment device comprises n-1 biometric matching results corresponding to n-1 previous transactions prior to the current transaction and wherein the current biometric matching result and the n-1 biometric matching results correspond to a biometric matching history.

12. A method as claimed in Claim 11, comprising analysing the biometric matching history and, in the event that the biometric matching history fluctuates strongly between biometric match values, the network server is configured to take one or more of the following actions: not trigger a PIN request, trigger (404) a PIN request, trigger (406) a PIN request if the current transaction is for a high value transaction, change (408) the status of the payment card (100) to indicate that the payment card is compromised.

13. A method as claimed in Claim 11, comprising analysing the biometric matching history and, in the event that the biometric matching history shows respectively gradual improvement or decline over time in biometric match result and ATC_{CURRENT} exceeds an absolute threshold value (AT₁, AT₂), the network server is configured to take one or more of the following actions: not trigger a PIN request, trigger (404) a PIN request, trigger (406) a PIN request if the current transaction is for a high value transaction, change (408) the status of the payment card (100) to compromised.

14. A computer program product comprising instructions which, when the program is executed by a server, cause the server to carry out the method of any of Claims 6 to 13.

15. A computer-readable storage medium comprising instructions which, when executed by a server, cause the server to carry out the method of any of Claims 6 to 13.
